# EUROPÄISCHE PATENTSCHRIFT

(11) **EP 0 621 664 B1**
(45) Veröffentlichungstag und Bekanntmachung des Hinweises auf die Patenterteilung: **22.01.1997**
(21) Anmeldenummer: 94105905.7
(22) Anmeldetag: 15.04.1994
(51) Int. Cl.: H01S 3/092, H01S 3/102, B23K 26/00

(54) **Stromversorgung für eine Laserblitzlampe**
Power supply for a laser flash lamp
Alimentation pour lampe à éclairs d'un laser

(30) Priorität: 22.04.1993 DE 4313231
(43) Veröffentlichungstag der Anmeldung: 26.10.1994
(73) Patentinhaber: Carl Baasel Lasertechnik GmbH, D-82319 Starnberg (DE)
(72) Erfinder: Langhans, Lutz, Dr., D-82319 Starnberg (DE); Mann, Olaf, D-82319 Starnberg (DE); Seifert, Wolfgang, D-82319 Starnberg (DE)
(74) Vertreter: Klunker . Schmitt-Nilson . Hirsch

(56) Entgegenhaltungen:
- EP-A- 0 005 595
- LASER FOCUS WORLD, Bd.18, Nr.10, Oktober 1982, TULSA US Seite 20 'FLASHLAMP CIRCUIT GENERATES STABLE QUASI-CW PULSES'
- OPTICS AND LASER TECHNOLOGY, Bd.23, Nr.3, Juni 1991, HAYWARDS HEATH GB Seiten 155 - 158 V.LUPEI ET AL. 'AN AUTOMATICALLY CONTROLLED Nd:YAG LASER WITH VARIABLE PULSE WIDTH'

## Beschreibung

Die Erfindung betrifft eine Stromversorgung für eine Laserblitzlampe, die an eine Gleichspannungsquelle mit Ladekondensator angeschlossen ist und Stomimpulse von bestimmter Dauer und Amplitude liefert.

Die Intensität der von der Laserblitzlampe eines Lasergeräts erzeugten Lichtblitze hängt von der Leistung der zum Betreiben der Laserblitzlampe erzeugten Impulse ab. Die Energie der Impulse bestimmt sich durch deren Leistung (Amplitude) und Dauer.

Für bestimmte Anwendungszwecke sind in bestimmter Weise geformte Impulse notwendig oder besonders günstig.

Mit Hilfe der Impulsformerschaltung läßt sich nicht nur die Impulsdauer variieren, sondern man kann den Verlauf der Amplitude der einzelnen Impulse variieren. Den bisher bekannten Stromversorgungen ist gemeinsam, daß die schließlich auf die Laserblitzlampe gegebenen Impulse jeweils einen glatten Amplitudenverlauf haben, wobei dieser Verlauf beispielsweise rampenförmig sein kann.

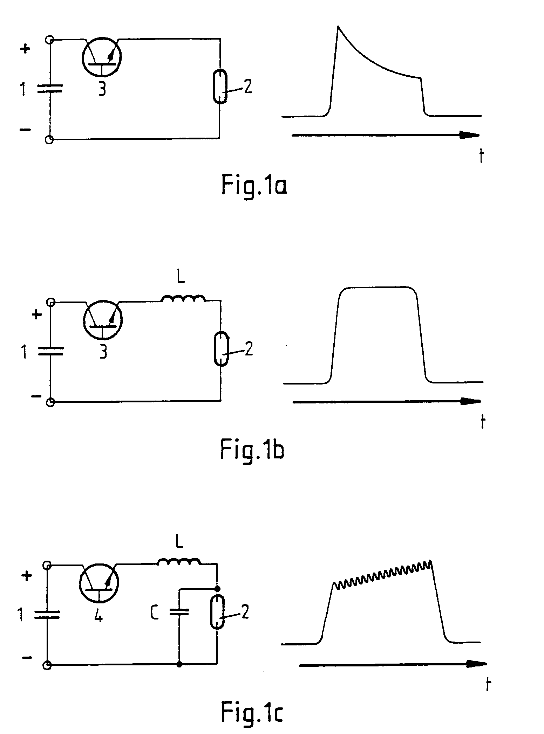

Nach dem Stand der Technik sind drei Impulsformen bekannt.
a) Entladung eines Kondensators 1 über einen Schalter 3 ergibt einen glatten, abfallenden Puls (Fig. 1 a)
b) Entladung eines Kondensators 1 über einen Schalter 3 und einen Filter (Induktivität L) ergibt einen glatten, annähernd rechteckigen Puls (Fig. 1 b)
c) Entladung eines Kondensators 1 über einen Hochfrequenz-Schalter 4 mit Pulsbreitenmodulation und nachgeschaltetem Tiefpaßfilter L, C ergibt einen glatten Puls, dessen Form sich einstellen läßt, z. B. ansteigend (Fig. 1 c)
   Eine solche Anordnung ist in der EP-B1-5595 beschrieben.

In vielen Anwendungsfällen spielt die Intensität der von der Laserblitzlampe abgegebenen Lichtblitze eine erhebliche Rolle, und dementsprechend müssen die Amplituden der der Laserblitzlampe zugeführten Impulse entsprechenden Anforderungen genügen.

Beim Schweißen, Schneiden und Bohren von Metall beispielsweise muß die Leistung in den einzelnen Impulsen einen bestimmten Schwellenwert übersteigen, damit das zu schweißende Material tatsächlich in der geforderten Weise angeschmolzen wird. Diese Schwellenwerte sind unter anderem materialabhängig. Dies bereitet unter Umständen einige Schwierigkeiten, da ja einerseits der Schwellenwert von der momentanen Impulsleistung überschritten werden muß, andererseits aber eine möglicherweise relativ geringe mittlere Leistung des Impulses gefordert wird, weil das für den Schneid - oder Schweißvorgang geforderte Anschmelzen des Materials auf einen engen Bereich begrenzt werden soll.

Der Erfindung liegt die Aufgabe zugrunde, eine Stromversorgung für eine Laserblitzlampe der eingangs genannten Art anzugeben, mit der die Einsatzmöglichkeiten des Lasergeräts verbessert werden können.

Gelöst wird diese Aufgabe erfindungsgemäß durch einen schnellen Schalter and eine Steuerung zum Einstellen einer Modulationstiefe und/oder einer Modulationsfrequenz zusätzlich, zu der mittleren Impulshöhe und der Impulsdauer.

Innerhalb jedes einzelnen Impulses wird dessen Amplitude z. B. derart moduliert, daß sich der Amplitudenwert mehrere Male zwischen einem Maximalwert und einem - relativen - Minimalwert ändert. Vorzugsweise sind die Anzahl dieser Amplitudenänderungen, also die sogenannten Modulationsfrequenz, und das Ausmaß der Amplitudenschwankungen innerhalb eines Impulses, also die sogenannte Modulationstiefe, durch eine separate Einstellvorrichtung einstellbar.

War man bisher bestrebt, den Amplitudenverlauf innerhalb jedes einzelnen Impulses möglichst glatt zu gestalten (in der EP-B1-5595 beispielsweise wird ein in der Impulsbreite modulierter Impulszug mit einem Tiefpaßfilter zu einem durchgehend glatten, sich möglicherweise aber zeitlich langsam ändernden Amplitudenverlauf verarbeitet), so setzt die vorliegende Erfindung eine periodisch schwankende Impulsamplitude innerhalb der jeweiligen Impulsdauer gezielt ein, um bestimmte Effekte zu erzielen.

Einer dieser Effekte besteht darin, daß man innerhalb jedes Impulses mehrmals relativ hohe Spitzenleistungen bei gleicher mittlerer Leistung des Impulses erreicht. Durch die relativ hohen Spitzenleistungen werden die oben erwähnten Schwellenwerte sicherer überschritten als bei glattem Amplitudenverlauf des Impulses gleicher mittlerer Leistung.

Wird das Lasergerät zum Beispiel zum Schweißen, Schneiden und Bohren von metallischen Werkstoffen eingesetzt, die durch eine bestimmte Schwellenleistung der Laserimpulse gekennzeichnet sind, wobei jedoch die Wärme beeinflußte Zone auf einem engen lokalen Bereich des Werkstücks begrenzt sein soll, so kann man durch entsprechende Einstellung der Impulsformerschaltung eine relativ niedrige mittlere Impulsleistung zum Ansteuern der Laserblitzlampe vorgeben, durch ausgeprägte Amplitudenmodulation der einzelnen Impulse aber gleichzeitig erreichen, daß der durch das zu schneidende oder schweißende Material vorgegebene Schwellenwert sicher (und mehrmals) überschritten wird.

Ein weiterer Effekt der erfindungsgemäßen Maßnahme besteht in der Unterbindung des Zustandekommens eines abschirmenden Plasmas bei der Laserbearbeitung. Beim Schweißen von metallischen Werkstücken beobachtet man die Entstehung von Plasma oberhalb der Schweißstelle. Dieses Plasma kann dem freien Durchtritt des Laserlichts zu der Schweißstelle entgegenstehen. Diese abschirmende Wirkung des Plasmas ist natürlich unerwünscht. Durch die erfindungsgemäße Maßnahme kann seine Entstehung soweit verringert werden, daß keine abschirmende Wirkung mehr eintritt.

Im folgenden wird ein Ausführungsbeispiel anhand der Zeichnung näher erläutert. In der Zeichnung zeigen:
Fig. 1 Pulsformen nach dem Stand der Technik
Fig. 2 ein Blockschaltbild einer Stromversorgung für eine Laserblitzlampe
Fig. 3 eine vergrößerte Darstellung eines in der erfindungsgemäßen Weise ausgebildeten Impulses zum Ansteuern einer Laserblitzlampe, und
Fig. 4 eine gegenüber Fig. 3 modifizierte Pulsform.

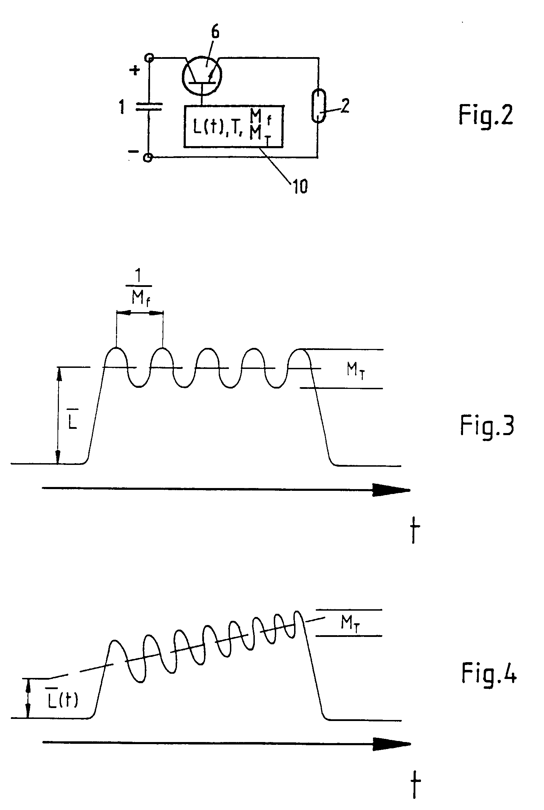

Nach Fig. 2 ist eine Laserblitzlampe 2 über einen schnellen Schalter 6 an eine Gleichspannungsquelle mit Ladekondensator 1 angeschlossen.

Der schnelle Schalter 6, z. B. ein Transistor, kann den Lampenstrom mit hoher Wiederholfrequenz von einigen zehn Kilohertz freigeben und unterbrechen. Durch geeignete Wahl der Schaltfrequenz und der Pulsbreite lassen sich durch die Steuerung 10 (Fig. 2) neben der Gesamtpulsdauer T und dem mittleren Pulshöhenverlauf L (t) die Modulationsfrequenz Mf und die Modulationstiefe M_{T} einstellen.

Über eine Steuerung 10 (Fig. 2) läßt sich nicht nur die erwähnte Modulationsfrequenz Mf, sondern auch die Modulationstiefe M_{T} vorwählen. Wie in Fig. 3 gezeigt ist, ändert sich durch die Modulation die mittlere Leistung L des einzelnen Impulses nicht. Allerdings ändert sich die Amplitude des Impulses dauernd zwischen zwei Werten, die durch die Modulationstiefe M_{T} vorgegeben sind.

Fig. 4 zeigt noch ein Beispiel mit ansteigendem Pulsverlauf, ansteigender Modulationsfrequenz und abnehmender Modulationstiefe. Diese Pulsform hat sich als besonders geeignet für Punktschweißungen erwiesen. Der schnelle Schalter 6 kann auch ein GTO-(Gate turn off)Thyristor, ein IGBT oder ein Thyristor mit Löschthyristor sein.

Die Steurung (10) enthält vorzugsweise einen Mikroprozessor.

## Patentansprüche

1. Stromversorgung für eine Laserblitzlampe (2), die an eine Gleichspannungsquelle mit Ladekondensator (1) angeschlossen ist und Stromimpulse bestimmter Dauer und Amplitude liefert, **gekennzeichnet durch**
einen schnellen Schalter (6) und eine Steuerung (10) zum Einstellen einer Modulationstiefe (M_{T}) und/oder einer Modulationsfrequenz (M_{f}) zusätzlich zu der mittleren Impulshöhe und der Impulsdauer.

## Claims

1. Current supply means for a laser flash lamp (2) which is connected to a constant voltage source with a charging capacitor (1) and provides current pulses of a certain duration and amplitude, characterized by a fast switch (6) and control means (10) for adjusting a depth of modulation (M_{T}) and/or a modulating frequency (M_{f}) in addition to the mean pulse height and the pulse duration.

## Revendications

1. Alimentation électrique pour une lampe à éclairs de laser (2), qui est reliée à une source de tension continue pourvue d'un condensateur de charge (1) et délivre des impulsions de courant de durée et d'amplitude déterminées,
caractérisée par
un commutateur à action rapide (6) et un système de commande (10) pour le réglage d'une profondeur de modulation (M_{T}) et/ou d'une fréquence de modulation (M_{f}) en plus de l'amplitude moyenne d'impulsion et de la durée d'impulsion.
